(19)

**Europäisches Patentamt**
**European Patent Office**
**Office européen des brevets**

(11) **EP 4 734 331 A1**

(12) **EUROPEAN PATENT APPLICATION**

(43) Date of publication:
**29.04.2026   Bulletin 2026/18**

(51) International Patent Classification (IPC):
*H02J 50/80* *(2016.01)*

(21) Application number: **24306804.6**

(22) Date of filing: **25.10.2024**

(52) Cooperative Patent Classification (CPC):
**H02J 50/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Sorace, Christian Vincent**
**31023 Toulouse Cedex 1 (FR)**

• **Oddoart, Ludovic**
**31023 Toulouse Cedex 1 (FR)**

(74) Representative: **Krott, Michel**
**NXP B.V.**
**Intellectual Property & Licensing**
**High Tech Campus 60**
**5656 AG Eindhoven (NL)**

Remarks:
Amended claims in accordance with Rule 137(2) EPC.

(54) **WIRELESS CHARGING RECEIVER**

(57)   Disclosed is a wireless charging receiver (100), comprising a rectifier unit (110), the rectifier unit (110) comprising access nodes (121, 122) being configured to provide a coupling to an external antenna (125); and a power path control unit (120), comprising a third access node (123) configured to provide electric power to a connected device (30); and a fourth access node (124) configured to provide electric power to an external energy storage unit (15), wherein the power path control unit (120) is configured to provide essentially constant impedance to a rectifier unit input during the provision of electric power to at least one of: the connected device, the connected energy storage unit (15). Energy paths to the external device and the energy storage unit may be operated separately in trickle charge and may be combined in constant current charging mode and constant voltage charging mode of the external energy storage unit.

Fig. 2

EP 4 734 331 A1

# EP 4 734 331 A1

**Description**

TECHNICAL FIELD

The present disclosure relates to a wireless charging receiver. Furthermore, the present disclosure relates to a method of operating a wireless charging receiver.

BACKGROUND

A wireless charging receiver enables devices that do not natively support wireless charging to harness this technology by converting electromagnetic energy into electrical energy. The wireless charging receiver contains an antenna that interacts with a wireless charging pad or transmitter using electromagnetic induction, when the device is placed on the wireless charging pad, the pad generates an alternating magnetic field. A receiver antenna picks up the alternating magnetic field and induces an alternating current (AC) within its circuitry. The alternating current (AC) generated by the magnetic field is not suitable for charging a battery of the device. The receiver converts this AC into direct current (DC) using a rectifier circuit. This conversion is necessary since most electronic devices operate on DC power.

SUMMARY

A first aspect of the present disclosure is directed to a wireless charging receiver, comprising:

a rectifier unit comprising a first access node and a second access node, the first and second access nodes configured to provide a coupling to an external antenna; and

a power path control unit, comprising

a third access node configured to provide electric power to a connected device; and
a fourth access node configured to provide electric power to a connected energy storage unit, wherein

the power path control unit is configured to provide essentially constant impedance to a rectifier unit input during the provision of electric power to at least one of the following: the connected device, the connected energy storage unit. The rectifier unit may be functionally coupled with the power path control unit in such a way that energy captured by the external antenna and collected by the rectifier unit is forwarded to the power path control unit. The power path control unit can forward this energy to the energy storage unit and/or the external device.

In this way, advantageously, access is provided to the connected external device also in a case, when the connected energy storage unit is discharged. Moreover, charging of the connected energy storage unit is also possible while providing electric power to the connected device. Advantageously, a received electric input power can be kept constant, wherein a path with a system load and a path with the energy storage unit may be operated separately in this way. As a result, the energy storage unit can be charged independently from supplying electric energy to the connected device. This allows the system platform to operate in dead battery mode by separating the system and battery power paths. In this way, power dissipation of the proposed wireless charging receiver may be optimized by avoiding the use of clamp voltage circuit on rectifier output.

A second aspect of the disclosure is directed to a method of operating a wireless charging receiver, comprising:

receiving electromagnetic energy via an antenna of a rectifier unit;
providing said received electromagnetic energy at least partially to a connected device and/or to a connected energy storage unit; wherein
an impedance vis-a-vis a rectifier unit output is kept constant, independent from load variations on the connected device and/or on the connected energy storage unit.

In this way, system platform current load variations are managed during trickle charge, constant current charge, and constant voltage charge by keeping a rectifier input impedance (and consequently an impedance seen by an external antenna) constant through an auto-regulated system.

In one or more embodiments, the rectifier unit comprises a rectifier element being coupled to the access nodes, wherein the power path control unit comprises:
a balance load unit being coupled to the rectifier element, wherein

a first sensing current representing a sum of electric current to the external device and to the external energy storage unit; and

a second sensing current representing an electric current during trickle charge of the external energy storage unit are coupled to the balance load unit.

In this way, the balance load unit is informed of the operating conditions at the access nodes with the external device and the energy storage unit, whereby the equalizing balance load unit can provide an electric current to maintain an impedance substantially constant concerning the rectifier unit.

In one or more embodiments, the power path control unit further comprises a main charge unit, the main charge unit being configured to act as a regulator during the trickle charge of the external energy storage unit, wherein the trickle charge unit is being configured to act as a charger during trickle charge of the external energy storage unit.

The different modules of the power path control unit implement an effective charging and operation unit with feedback signals. In this way, the main charge unit can be operated in different modes (regulator mode, charging mode) to provide electric energy very effectively to the external device and to the energy storage unit.

In one or more embodiments, the power path control unit further comprises a trickle charger unit, the trickle charger unit being configured to act as a current source while providing electric energy to the external energy storage unit in a discharged state up to a specified voltage level.

In this way, the power paths connected to the energy storage unit and the external device (system platform) are separated.

In one or more embodiments, the trickle charger unit is configured to act as a current source during the provision of electric energy to the external energy storage unit in a discharged state up to a specified voltage level.

Also in this way, the power paths connected to the energy storage unit and the external device (system platform) are separated during trickle charge.

In one or more embodiments, the first sensing current is provided from the main charge unit to the balance load unit and wherein the second sensing current is provided from the trickle charge unit while providing electric energy to the external energy storage unit during trickle charge. Trickle current is subtracted in trickle charging mode to have only a replica of the system current. Two different feedback signals are thus provided from the main charge unit and the trickle charge unit to support different operating conditions on the path to the connected external device and to the connected external energy storage unit.

In one or more embodiments, when the external energy storage unit is charged to a target voltage, the main charge unit is configured to be switched automatically from a constant current charging mode to a constant voltage charging mode to keep the charging voltage of the external energy storage unit essentially constant.

This way, the main charge unit can be driven in different charging modes to charge the external storage unit efficiently. Advantageously, the target voltage levels can be flexibly adapted to different energy-storing units. Switching from CC-mode (constant current charging mode) to CV-mode (constant voltage charging mode) in the application is performed automatically within the main charge unit (linear charger), except that once a VBAT target is reached, an end-of-charge comparator is enabled in CV mode by a firmware.

In one or more embodiments, the balance load unit is configured to be disabled or enabled during the constant current mode. This allows the system platform to better face transient loads.

In one or more embodiments, the wireless charging receiver further comprises a switch unit, the switch unit being configured to be closed in constant current mode charging and constant voltage mode charging of the external energy storage unit. The switch unit is a simple device that can establish or interrupt the connection to the energy storage system, depending on its state of charge.

In one or more embodiments, the balance load unit is enabled during trickle charge and constant voltage mode. In this way, the balance load unit is adaptable to different operation charging states of the energy storage unit.

In one or more embodiments the balance load unit is enabled during constant current mode.

In this way also transient load on the access node to the external device may be faced. This may be helpful in a case, when load variations appear during the constant current phase which result in transient loads. By means of the balance load unit, these variations may be absorbed at least partially.

In one or more embodiments, the balance load unit is programable, wherein the balance load unit is configured to consume a programmed value, wherein the programmed current value depends on the current to the system platform and/or to the energy storage unit.

The programmability of the balance load unit may be helpful and be used to define a specific current that is to be provided to the connected external energy storage unit or to the connected external device. The programmability of the load balance unit may depend on the system platform load requirement. A main goal of the balance load unit is to absorb a current variation on the system node being connected to the external device. The programmation of the balance load unit is thus adjusted, knowing a maximum power consumption to absorb this maximum electric power consumption using the balance load unit. The adaptability of the whole system is thus enhanced in this way.

In one or more embodiments, the balance load unit is configured to generate a current mirror-based representation of a change of the current charge to generate a current through the balance load unit. The current mirror-based arrangement enables a response to rapid transient load changes at the access nodes.

BRIEF DESCRIPTION OF DRAWINGS

The above discussion/summary does not describe each embodiment or implementation of the present disclosure; the following drawings and detailed description also exemplify various embodiments. The aspects defined above and further aspects of the present disclosure are apparent from the examples of embodiments described hereinafter concerning the appended drawings, which are explained concerning the examples of embodiment. However, the disclosure is not limited to the examples of embodiment. Rather, the intention is to cover all modifications, equivalents, and alternatives falling within the scope of the disclosure, including aspects defined in the claims. In addition, the term "example," used throughout this application, is only used as an illustration and not as a limitation.

All illustrations in the drawings are only schematic and not necessarily drawn to scale. In various figures, similar or identical elements or features are provided with the same reference signs or reference signs that only differ from the corresponding reference signs in the first digit. To avoid unnecessary repetition, elements or features that have already been explained concerning a previously described embodiment are not explained again later in the description.

Various example embodiments may be more completely understood considering the following detailed description in connection with the accompanying drawings.

FIG. 1        shows a conventional wireless charging receiver;

FIG. 2        shows an embodiment of a proposed wireless charging receiver;

FIG. 3        shows available power paths to a connected system platform and to a connected energy storage in different charging modes;

FIG. 4        shows a functional principle of a balance load unit;

FIG. 5        shows an embodiment of a power path with balancing load circuit;

FIG. 6        shows a battery charging profile with modes of different modules within the power path, wherein a balance load unit is disabled during constant current charging;

FIG. 7        shows a current flow within the power path of the wireless charging receiver during trickle charge;

FIG. 8        shows a current flow within the power path of the wireless charging receiver during constant voltage and constant current charge;

FIG. 9        shows a timing diagram of transient load operation within the power path during trickle charge;

FIG. 10       shows a timing diagram of transient load operation within the power path during constant voltage charge mode;

FIG. 11       shows a battery charging profile with modes of different modules within the power path, wherein a balance load unit is enabled during constant current charging;

FIG. 12       shows a timing diagram of transient load operation within the power path during trickle charge;

FIG. 13       shows a timing diagram of transient load operation within the power path during constant current charge; and

FIG. 14       shows a timing diagram of transient load operation within the power path during constant voltage charge.

DESCRIPTION OF EMBODIMENTS

In the following description, various details are set forth to describe specific examples presented herein. However, it should be apparent to one skilled in the art that one or more other examples and/or variations of these examples may be practiced without all the specific details given below. In other instances, well-known features have not been described in detail so as not to obscure descriptions of examples. For ease of illustration, the same reference signs may be used in different diagrams to refer to the same elements or additional instances of the same element. Also, although aspects and features may, in some cases, be described in individual figures, it will be appreciated that features from one figure or embodiment can be combined with features of another figure or embodiment even though the combination is not explicitly shown or described as a combination.

The present disclosure provides a wireless charging receiver which can:

(i) supply a system platform in dead battery during trickle charge by:

- using a dedicated system power path to supply system platform,
- using a dedicated battery charging path to charge the battery during trickle charge;

(ii) contain receiving an approximately constant antenna voltage by:

- keeping rectifier input impedance constant with an auto-regulated system during trickle charge and constant voltage charge,
- sensing the battery charge current and the system load current.
- use current feedback loops and current based circuits to avoid stability issues and to benefit from fast transient response;

(iii) improve wireless charging receiver efficiency by:

- using a minimum set of dissipating elements,
- avoiding the use of voltage clamp at rectifier output;

(iv) ensure integrity of emitter/receiver communication while containing receiving antenna voltage.

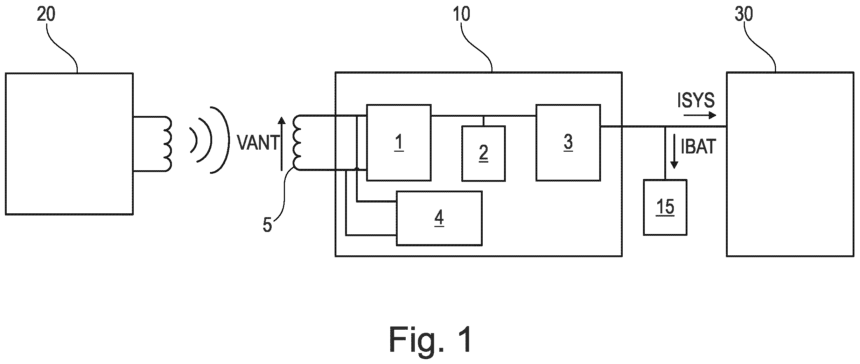

FIG. 1 shows a block diagram of a conventional wireless charging receiver 10. A wireless charging receiver in the context of the present disclosure represents a device that receives wireless energy and uses said received energy to electrically energize at least one device connected to the wireless charging receiver. The wireless charging receiver 10 comprises a rectifier unit 1, a voltage clamp circuit 2, a power path controller 3, and a communication controller 4. It can be seen that the wireless charging receiver architecture is designed to connect an energy storage unit (e.g., battery, accumulator) 15 and an external system platform 30 directly. The external system platform 30 may comprise electronic circuits, which need electric energy during operation and which are powered by the wireless energy as received by the wireless charging receiver 10 in addition to energy which is used to charge the energy storage unit 15.

The energy storage unit 15 may be used to energize the system platform 30 if no wireless energy is received from a charging transmitter 20 via an antenna 5. System platform operation in a dead energy storage unit 15 (e.g. battery) is impossible in such a configuration. The wireless energy cannot supply the system platform 30 in case of a dead energy storage unit 15. In the arrangement of FIG. 1, if wireless charging energy is received by antenna 5 and energy storage unit 15 is not sufficiently charged, then the system platform (external device) 30 cannot be supplied. Moreover, for a given power transmitted by the charging transmitter 20, an electric voltage VANT seen on the receiving antenna 5 is directly proportional to a charger load (IBAT+ISYS), driving the voltage VANT to under- or overvoltage variations.

In said conventional implementation of a wireless charging receiver 10 with clamped antenna voltage using a DC limiter (e.g. voltage clamp circuit 2), the following exemplary disadvantages may result:

- DC limiter drives efficiency losses, impacting the charging efficiency performance
- DC limiter can reduce impedance seen by the antenna to a point that no more TX/RX communication is possible

The rectifier output voltage being clamped to a defined voltage using a shunt regulator or a DC limiter may result in a vital power loss impacting the overall power efficiency budget.

The conventional arrangement of FIG. 1 effectively connects the energy storage unit 15 to the system platform 30. However, if the energy storage unit 15 is dead (totally discharged), using the system platform 30 is impossible. Moreover, as a further disadvantage, if the wireless charging transmitter 20 generates too much power, a voltage clamp circuit 2 will be activated, which may cause power dissipation.

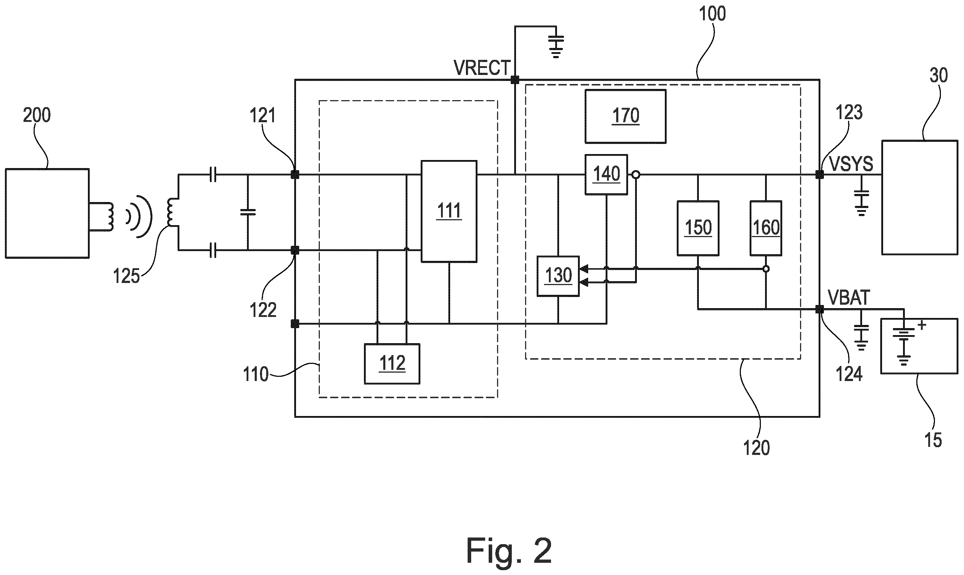

FIG. 2 shows a proposed wireless charging receiver 100 comprising a rectifier unit 110 and a power path control unit 120. A wireless charging transmitter 200 emits wireless signals containing electrical energy being received by an external antenna 125 of the wireless charging receiver 100, the antenna 125 being connected to access notes 121, 122 of the wireless charging receiver 100. A received signal is fed to rectifier 111, which rectifies the incoming signal and provides the signal to the main charge unit 140. An output of the main charge unit 140 is coupled to an access node 123 to provide electric energy to an external device or external platform 30. A second access node 124 is coupled to a power switch 150 (battery path power controller) and to an external energy storage unit 15 (e.g., battery, accumulator). The power switch 50 is coupled between the access nodes 123 and 124. Furthermore, a trickle charge unit 160 is coupled between the access nodes 123, 124. A communication module 112 (comprising e.g., demodulator, modulator, clock recovery, PLL, etc.) is also coupled to the access nodes 121, 122 and implements communication functionality. An operation control unit 170 inside power path control unit 120 may control switching between different operational modes of the wireless charging receiver 100. Furthermore, two feedback lines are intended to provide feedback from the main charge unit 140 and the trickle charge unit 160 to a balance load unit (phantom load) 130. The balance load unit 130 is configured to provide essentially constant impedance to the output of rectifier element 111, independent from operating conditions of the wireless charging receiver 100, as illustrated in more detail below.

The proposed wireless charging receiver 100 can:

- supply a system platform in the dead battery during trickle charge by:

     a. using a dedicated system power path to supply system platform
     b. using a dedicated battery charging path to charge the battery during trickle charge

Furthermore, the proposed wireless charging receiver 100 can:

- contain receiving antenna voltage by:

     a. keeping rectifier input impedance constant with an auto regulated system during trickle charge and constant voltage charge.
     b. sensing the battery charge current and the system load current, and
     c. use current feedbacks loops and current based circuit to avoid stability issue and to benefit to fast transient response

Furthermore, the proposed wireless charging receiver 100 can:

- improve wireless charging receiver efficiency by:

     a. using a minimum set of dissipating elements, and
     b. avoiding the use of voltage clamp at rectifier output.

As a result, the integrity of emitter/receiver communication is ensured while containing the receiving antenna voltage. In other words, a constant input impedance is provided, resulting in a fixed electric voltage at a rectifier input, obtained by a specific arrangement during trickle charge and constant voltage charge, as illustrated hereinafter in more detail. In this way, the impedance seen by the external 125 antenna may be kept essentially constant, independent of a load current variation. This is also possible in constant current charge mode.

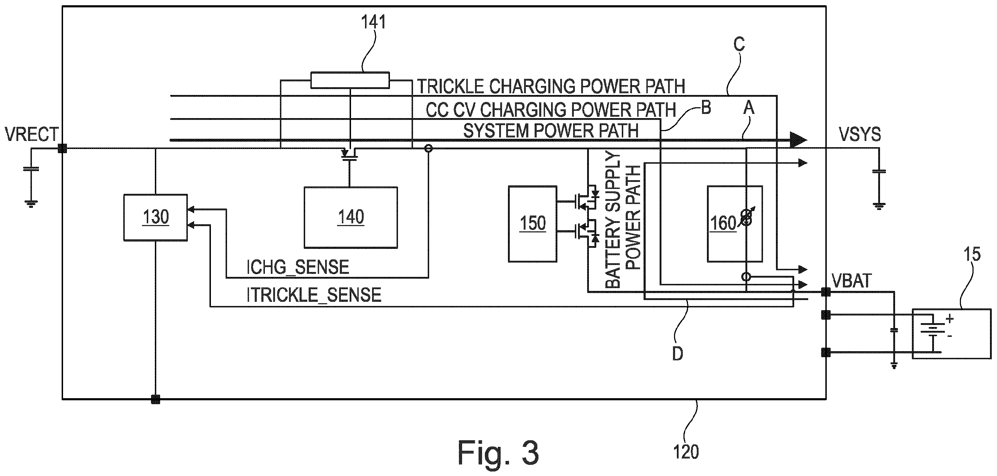

FIG. 3 shows the power path control unit 120 in more functional detail. The power path control unit 120 comprises three power paths: a system power path A, a constant current/ constant voltage power path B, and a trickle charging power path C. Furthermore, a battery supply power path D is arranged between the system power path A and the energy storage unit 15. The battery supply power path D is active, when the external device 30 (e.g. system platform) is energized by the energy storage unit 15 and no electric power is provided by the rectifier element 111 of the rectifier unit 110, wherein the voltage of the energy storage unit 15 needs to be high enough to supply the system platform 30. The trickle charge power path C is active during the trickle charge of the energy storage unit 15, which means it is active in dead energy storage unit 15. The system power path A is enabled as soon as electric energy is available from the rectifier element 111 and is used to energize the system platform 30. The constant current/constant voltage power path B is active during CC-mode and during CV-mode.

A first feedback signal, ICHG_SENSE, from the main charge unit 140 is fed to the balance load unit 130, and a second feedback signal, ITRICKLE_SENSE, is fed to the balance load unit 130 from the trickle charge unit 160. A bulk management device 141 may be used to control the main charge unit 140, e.g., to prevent reverse current through a FET coupled to the main charge unit 140 during specific phases of charging operation, a goal is to connect bulk of a power device to avoid leakage through parasitic diodes and the power device.

The main charge unit 140 may act as a regulator to supply the external device 30 during trickle charge and as a charger during constant current and voltage charge. A power switch 150 may exemplarily be implemented by serial coupled FETs, which are opened during trickle charge and closed during constant current/constant voltage charge to short system voltage VSYS and battery voltage VBAT. A trickle charge unit 160 is active only during trickle charge of the external energy storage unit 15. The balance load unit 130 is configured to keep an impedance as seen by the rectifier output constant and consequently also towards the external antenna 125.

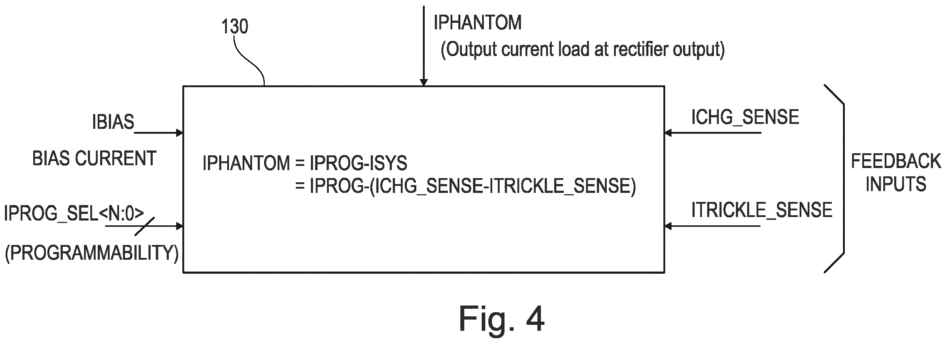

FIG. 4 shows the functionality of the balance load unit 130 in more detail. The balance load unit 130 uses a feedback signal ITRICKLE_SENSE from the trickle charge unit 160 and a feedback signal ICHG_SENSE from the main charge unit 140 as inputs. During constant current charge and constant voltage charge the ITRICKLE SENSE path is deactivated meaning that ITRICKLE_SENSE = 0. Said feedback signals are used to adjust an output current IPHANTOM dynamically to maintain rectifier output load current constant at rectifier output. The balance load unit 130 comprises a programmable bias current IPROG to define a default output load current (default value of phantom load) on rectifier node built from IBIAS and based on the programmability IPROG_SEL<N:0>. It is built using current mirrors and current feedback to ensure a fast response during the system transient load of the wireless charger receiver 100. The balance load unit 130 is enabled during trickle charge to handle current load variations from system platform 30, it handles transient load. Moreover, the balance load unit 130 is enabled during constant voltage to respond appropriately to system transient load or battery charge current variation. Balance load unit 130 might be also enabled during constant current charge to face to negative transient load.

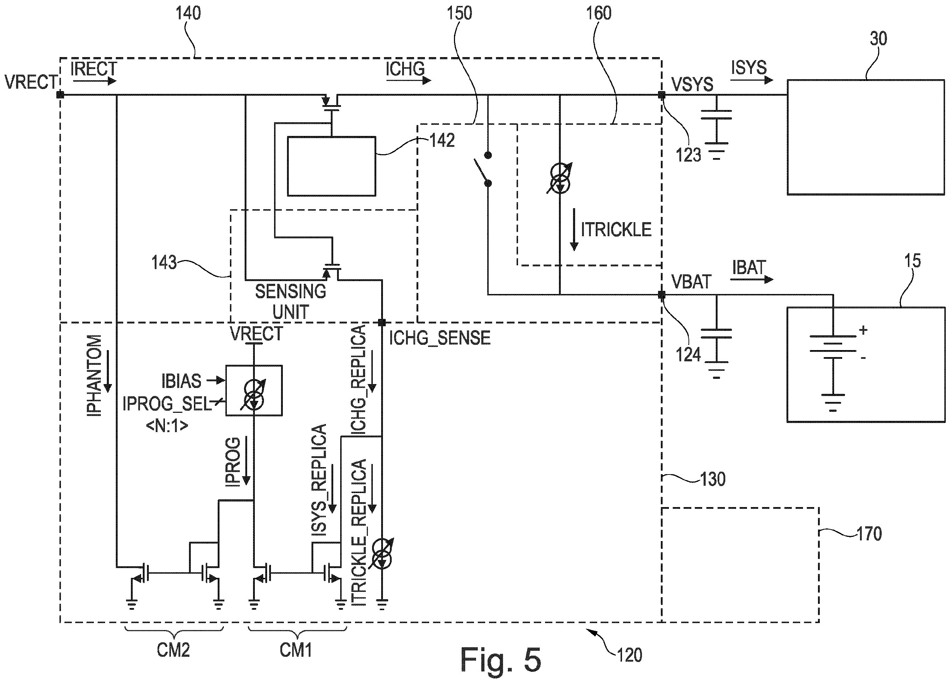

FIG. 5 shows the power path control unit 120 of the wireless charger receiver 100 in more functional detail. A current IRECT is supplied to the main charge unit 140 from the rectifier element 111 of the rectifier unit 110 (not shown in FIG. 5). A sensing unit 143 is coupled to the rectifier current IRECT, wherein said sensing unit 143 determines a current through the main charge unit 140 and provides said current as a feedback signal to the balance load unit 130. The main charge control unit 140 is controlled by a linear charger controller 142. A current ITRICKLE_REPLICA corresponds essentially to the ITRICKLE_SENSE shown in FIG. 3. The current ITRICKLE_REPLICA can be either implemented as a sense current or as a programmable current source, formed as a replica with the same programmation as the trickle charger current ITRICKLE of the trickle charge unit 160. Hence, there are two ways to implement the current ITRICKLE_REPLICA. If the trickle charge unit 160 is enabled, the ITRICKLE_REPLICA is subtracted from the ICHG_REPLICA. The charging current ICHG is the sum of the system current ISYS plus the current IBAT to the external energy storage unit 15. If the current through the energy storage unit 15 is subtracted during trickle charge, according to the following equation ICHG - ITRICKLE, remaining in the system current ISYS. During trickle charge, the result ISYS_REPLICA is equal to ICHG minus ITRICKLE.

In contrast, when the wireless charging receiver 100 is in CC-MODE or CV-MODE, ITRICKLE_REPLICA is equal to zero, resulting in ICHG_REPLICA = ISYS_REPLICA. The balance load unit 130 comprises two current mirrors CM1, CM2, wherein a first current mirror CM1 is used to generate a current ISYS_REPLICA out of currents ICHG_REPLICA (from the main charge unit 140) and ITRICKLE_REPLICA (from the trickle charge unit 160). A second current mirror CM2 generates the current through the balance load unit 130 out of the programmed IPROG. The current IPROG represents the default current flowing as IPHANTOM with ICHG = 0 (and ITRICKLE=0). The current ICHG represents the total current flowing to VSYS and VBAT with ICHG = ISYS + IBAT. The current ISYS_REPLICA is a reconstruction of the system current used to balance the load at rectifier output, wherein this is valid only during trickle charge. In contrast, in CC-mode and in CV-mode (ITRICKLE = 0), the current ISYS_REPLICA is a reconstruction ICHG_REPLICA of the ICHG current with ICHG = ISYS + IBAT, i.e. the total load current.

The main charge unit 140 acts as a regulator to supply the system platform during trickle charge or as a charger during constant current mode (CC-MODE) and constant voltage mode (CV-MODE). If the main charge unit 140 acts as a regulator, it can be seen as a voltage source. If the main charge unit 140 acts as a charger, it can be seen as a current source.

The main functionality of the balance load unit 130 is to keep the impedance essentially constant at the output of the rectifier element 111 in any operational mode of the wireless charging receiver 100. In the case of constant current charging mode, power will be absorbed when there is a negative transient load. In case of negative transient load, the goal is to absorb this power and to maintain a constant power from the wireless charging transmitter 200.

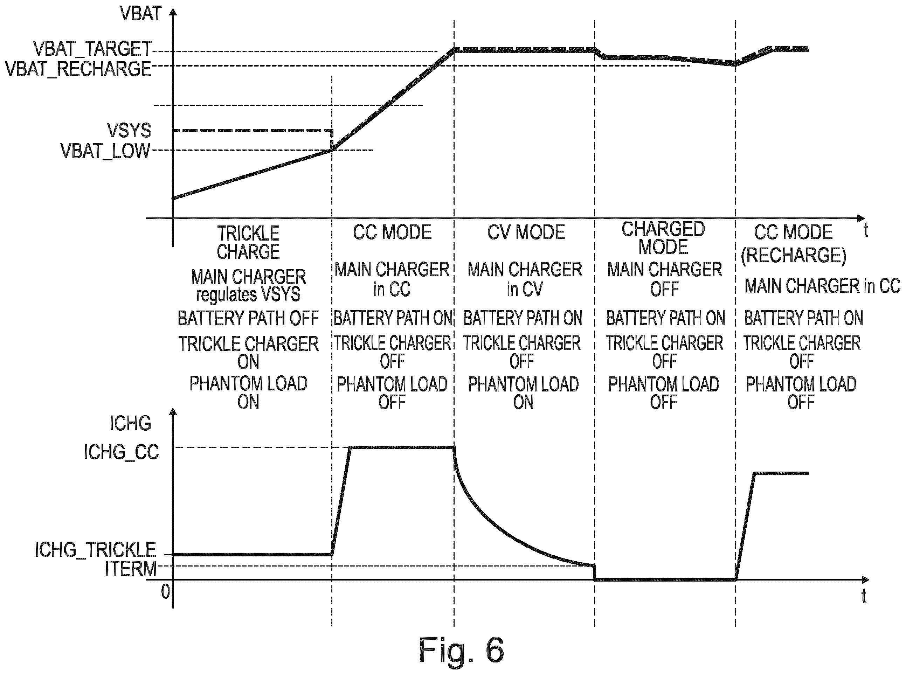

FIG. 6 shows different charging phases over time t using the power paths and the components described above enabled and disabled accordingly. Different modes are performed in those charging phases depending on the voltage value reached by the energy storage unit 15. The diagram shows in an upper section the battery voltage according to different charging modes (TRICKLE CHARGE, CC-MODE, CV-MODE, CHARGED MODE) with the operation modes of the main charge unit 140, the power switch 150, the trickle charge unit 160 and the balance load unit 130. In the lower section of FIG. 6, charging currents corresponding to the above described charging phases are shown over time t. A summary of battery charging operation as shown in FIG. 6 is as follows:

TRICKLE CHARGING (TRICKLE MODE):

- VSYS output voltage is regulated by the main charge unit 140 in an LDO mode (Low Drop Voltage Output Mode) acting as a voltage regulator
- Trickle charge unit 160 is enabled and charges the energy storage unit 15 while the power switch 150 is kept OFF
- A constant current is delivered by the rectifier VRECT while VSYS load is varying thanks to the balance load unit 130 (phantom load)

CONSTANT CURRENT CHARGING MODE (CC-MODE):

- in CC-MODE, balance load unit 130 can be used to absorb negative transient load current
- VSYS (voltage on access node 123) = VBAT (voltage on access node 124),
- main charge unit 140 operates as a charger
- trickle charge unit 160 is disabled
- supplement mode is possible as VSYS=VBAT. The supplement mode is a mode, where in case of huge transient load, the energy storage unit 15 will provide the required additional current to the external device 30
- if the access node 123 is coupled to the energy storage unit 15, e.g., the system provides 60mA and the external device 30 requests 80mA, this results in a lack of 20mA. In this case, the lack of 20mA will be provided by the energy storage unit 15 using the battery supply power path D shown in FIG. 3. However, the supplement mode is possible only in CC-mode or CV-mode.
- constant battery charging current delivered by main charge unit 140
- VRECT is regulated to manage minimum headroom on Q1 charging path: VRECT = VSYS + 300mV
- saturation detection of the main charge unit 140 is also possible to manage minimum power dissipation losses
- supplement mode is possible as VSYS = VBAT. In case of huge transient load, external energy storage unit 15 will provide the required additional current to the system platform 30

CONSTANT VOLTAGE CHARGING MODE (CV-MODE):

- same as constant current charging mode
- balance load unit 130 is enabled in order to manage decreases of energy storage unit current

BATTERY PATH MODE:

- no field is present.
- VSYS =VBAT: application supplied through battery.
- main charge unit 140 is disabled.

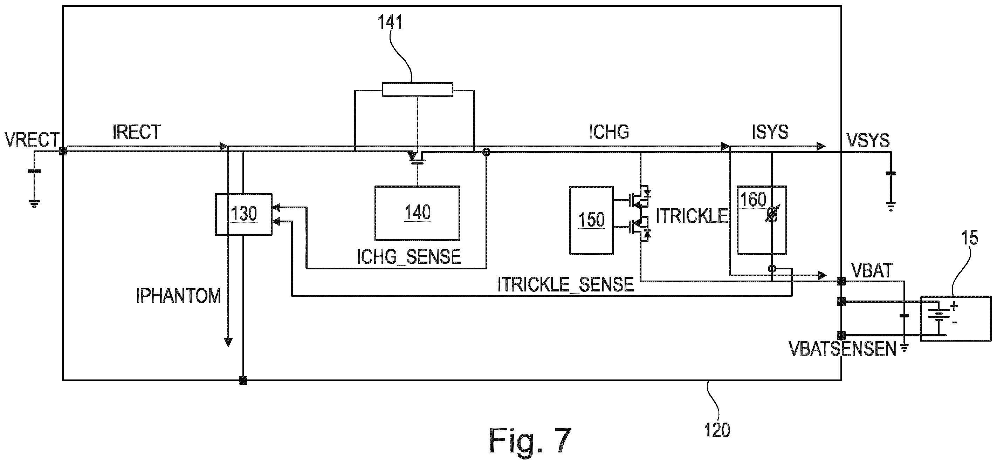

FIG. 7 shows a current flow through the power path of the power path control unit 120 during trickle charge, i.e. a charge process of a fully discharged energy storage unit 15. In trickle charge, rectifier output impedance is kept constant by keeping constant IRECT rectifier output current and fulfilling the below equations:

$$IRECT = IPHANTOM + ICHG \qquad (1)$$

$$ICHG = ISYS + ITRICKLE \qquad (2)$$

$$IPHANTOM = IPROG - ISYS \qquad (3)$$

$$IPHANTOM = IPROG - (ICHG\_SENSE - ITRICKLE\_SENSE) \qquad (4)$$

then

$$IRECT = IPROG - ISYS + ICHG \qquad (5)$$

$$IRECT = IPROG + ITRICKLE \qquad (6)$$

with:

IRECT            rectifier output current
ICHG             main power path current
ISYS             system power path current
ITRICKLE         trickle charge current
ICHG_SENSE       main power path sense current
ITRICKLE_SENSE   trickle charge sense current
IPHANTOM         balance load unit current

This means that the rectifier output current IRECT is kept constant and is not dependent on the system power path current ISYS. It should be noted that the quiescent current of the wireless charging receiver 100 is not taken into account to describe the above principle.

FIG. 7 shows two feedback signals ICHG_SENSE and ITRICKLE_SENSE being supplied to the balance load unit 130.

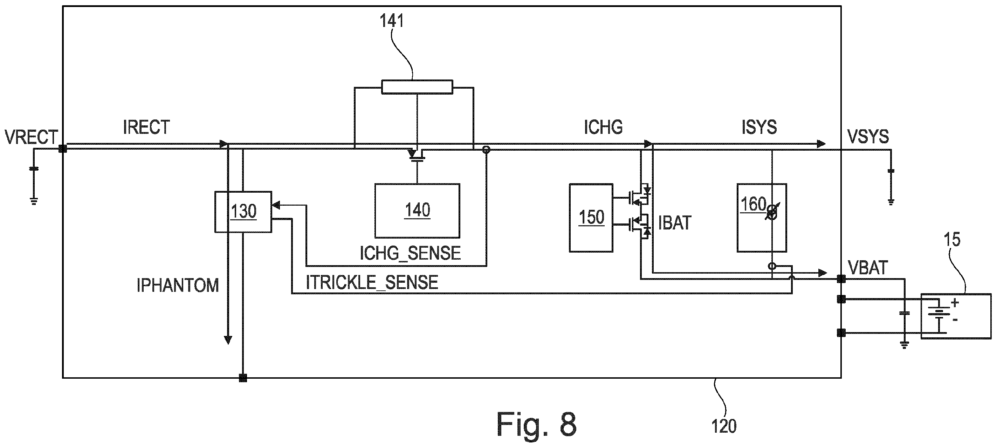

In a further embodiment, it is also possible to activate only the ICHG_SENSE path and, at the same time, to disable the ITRICKLE_SENSE PATH to balance through the balance load unit current IPHANTOM the total charge current ICHG = ISYS + ITRICKLE. In such a case, equations described below in the context of FIG. 8 are applied.

FIG. 8 shows the current flows through the power path control unit 120 during the constant voltage charge (CV-MODE) and the constant current charge (CC-MODE) of the energy storage unit 15. In these scenarios, only a single feedback signal ICHG_SENSE from the main charge unit 140 is active and supplied to the balance load unit 130. During constant voltage charging and constant current charging, rectifier output impedance is kept constant by keeping rectifier output current IRECT constant by fulfilling the below equations:

$$IRECT = IPHANTOM + ICHG \qquad (7)$$

$$ICHG = ISYS + IBAT \qquad (8)$$

As IPHANTOM = IPROG - (ICHG_SENSE - ITRICKLE_SENSE)
with ITRICKLE_SENSE = 0

$$then \ IPHANTOM = IPROG - ICHG\_SENSE \qquad (9)$$

then

$$IRECT = IPROG - ICHG + ICHG$$

$$IRECT = IPROG \qquad (10)$$

with:

IBAT     charge current of energy storage unit

In other words, the rectifier output current IRECT is kept constant and is not in any way dependent on system power path current ISYS used to energize the external device 30 (not shown in FIG. 8). In the scenario of FIG. 8, the balance load unit 130 is ON, wherein only one feedback signal is supplied to the balance load unit 130 to control the balance load unit 130, such that the balance load unit 130 provides a current IPHANTOM to provide constant impedance to the rectifier element 111 and as a consequence, also to the antenna 125. As a result, the rectifier current IRECT stays essentially constant, independent of changes in the system current ISYS and the charge current ICHG.

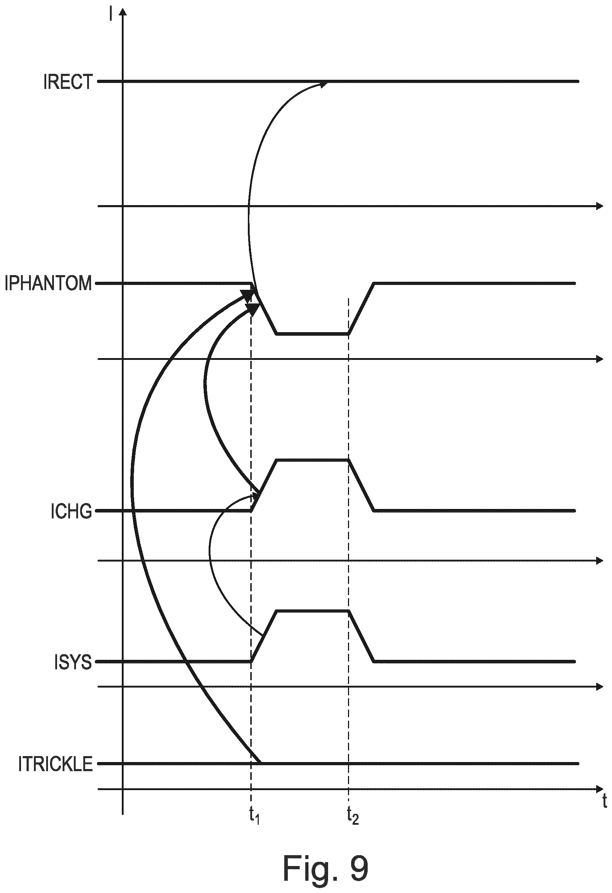

FIG. 9 shows timing diagrams of a transient load operation with the power path during trickle charge of the energy storage unit 15. The trickle charge current ITRICKLE is maintained essentially constant over time t. It can be seen, that in case, that the system current ISYS increases at a time t1, this will cause that charging current ICHG to also increase. As a consequence, in order to keep the rectifier IRECT constant, balance load current IPHANTOM through the balance load unit 130 decreases at t1. As soon as the charge current ICHG declines at a time t2, the total decline is absorbed again by the balance load current IPHANTOM, which increases at the time t2. It can be seen, that the trickle charge current ITRICKLE and the main power path current ICHG have direct impact on the balance load current IPHANTOM. Furthermore, the system current ISYS has an impact on the balance load current IPHANTOM. Furthermore, the balance load current IPHANTOM has an impact on the rectifier current IRECT, which is kept essentially constant. Summarizing, FIG. 9 shows a context between the currents in the power path control unit 120 during trickle charge of the energy storage unit 15.

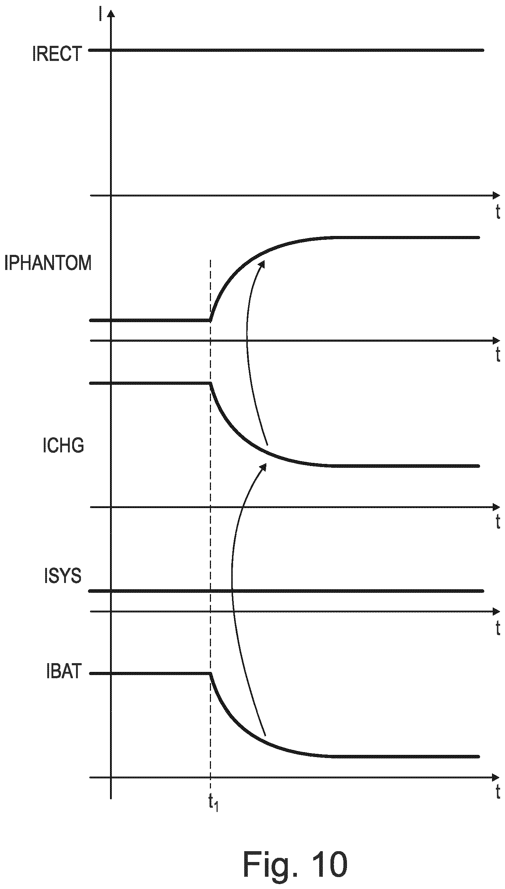

FIG. 10 shows timing diagrams of transient load operation within the power path of the power path control unit 120 during constant voltage charge CV-MODE of the energy storage unit 15. The behavior on the balance load unit 130 in the constant voltage charge CV-MODE is the same as in trickle charge, as shown in FIGs. 8, 9, except that in constant voltage charge CV-MODE the trickle charge current ITRICKLE (not shown in FIG. 10) is zero, because only the main charger current feedback ICHG_SENSE is active. In addition, it can be seen that the system current ISYS is considered constant, whereas the variation of the charge current IBAT is also compensated by the balance load current IPHANTOM due to the adapted balance load unit 130 as described above. In more detail, as the energy unit current IBAT decreases at t1, this will be compensated by an increased balance load current IPHANTOM through the balance load unit 130 to maintain the rectifier current IRECT constant. Summarizing, FIG. 10 shows that a decreased energy unit current IBAT results in a decreased charge current ICHG and an increased balance load unit current IPHANTOM.

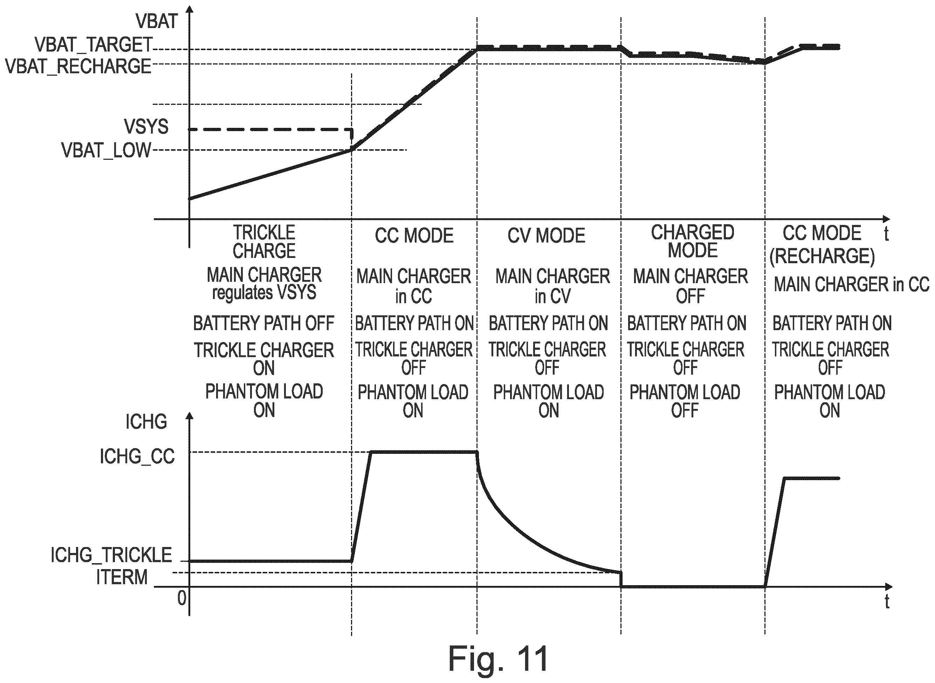

FIG. 11 shows a charging profile using the balance load unit 130 during constant current charge CC-MODE of the energy storage unit 15. Similar to the charging profile of FIG. 6, different charging phases are shown over time t using this power path, and the modules main charge unit 140, battery power switch 150, trickle charge unit 160 and balance load unit 130 are operated in said different charging phases. In particular, depending on the reached voltage value of the energy storage unit 15, different modes are performed in those charging phases. The diagram shows in an upper section phases of the charging of the energy storage unit 15 the charging phases TRICKLE CHARGE, CC-MODE, CV-MODE, CHARGED MODE together with corresponding operation modes of the main charge unit 140, the trickle charge unit 160, the power switch 150 and the status of the balance load unit 130.

It can be seen, that the balance load unit 130 is activated during CC-MODE, which is not the case in the scenarios shown in FIG. 6. At the voltage level VBAT_LOW a transition takes place from the trickle charge mode to the CC-MODE, at the level VBAT_TARGET a transition takes place from the CC-MODE to the CV-MODE, wherein during the CV-MODE the voltage level at the energy storage unit 15 is constant. In a CHARGED-MODE the voltage level at the energy storage unit 15 declines from the level VBAT_TARGET to the level VBAT_RECHARGE. Finally, after having reached the level VBAT_RECHARGE the whole charging process starts again with the CC-MODE.

In the lower section of FIG. 11 charging currents corresponding to the above described charging phases are shown over time t. It can be seen, that in trickle charge the charging of the energy storage unit 15 takes place with a constant value ICHG_TRICKLE of the charging current ICHG. In the CC-MODE, an even higher amount of the charging current is used to charge the energy storage unit 15 until a constant level ICHG_CC of the charging current ICHG within the CC-MODE is reached. Afterwards, in the CV-MODE, the charging current declines until the charging current reaches the level ITERM which is reduced to zero during the CHARGED MODE. In other words, during the CHARGED MODE no charging current is provided.

The described transitions between the mentioned different charging phases are managed by an operation control unit 170, which is preferably implemented by firmware or by a finite state machine. The operation control unit 170 checks the voltage levels in the above illustrated charging phases of the energy storage unit 15 and performs the switching between CC-MODE and CV-MODE. In addition, the operation control unit 170 also programs the charging current value in TRICKLE charge (ITRICKLE) and CC charge (ICHG).

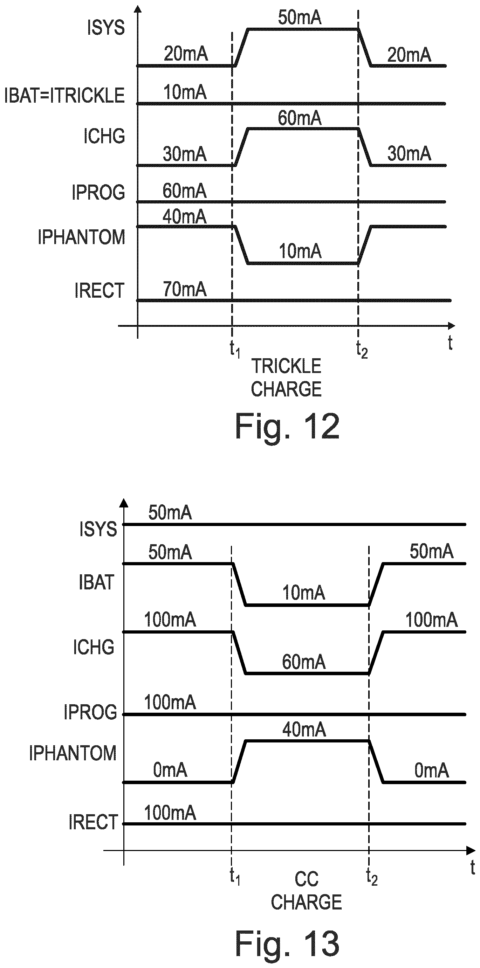

FIG. 12 shows an exemplary timing diagram with a TRICKLE CHARGE phase during a charging process of the energy storage unit 15. It can be seen that in said process, in an initial condition IBAT = ITRICKLE = 10mA. A first event is an ISYS variation from 20mA to 50mA at time t1, wherein, as a consequence, the current ICHG increases from 30mA to 60mA at time t1. Then, in a third event, the current IPHANTOM is adapted and decreased at time t1 from 40mA to 10mA to keep the rectifier current IRECT constant. Hence, the rectifier output current IRECT remains constant at approximately 70mA, independent from the variations in the system current ISYS and the charge current ICHG, but thanks to the balance load current IPHANTOM.

FIG. 13 shows an exemplary timing diagram with a CC-CHARGE phase during the charging process of the energy storage unit 15. It can be seen that in an initial condition ISYS is constant at 50mA. Then, the charge current ICHG is decreased at time t1 from 100mA to 60mA, e.g. due to a temperature variation. As a consequence, the current IBAT decreases at time t1 from 50mA to 10mA. As a result, the balance load current IPHANTOM increases at time t1 from 0mA to 40mA to maintain the rectifier current IRECT constant. Hence, the rectifier output current IRECT remains constant at approximately 100mA, independent from variations in the charge current ICHG but thanks to the balance load current IPHANTOM.

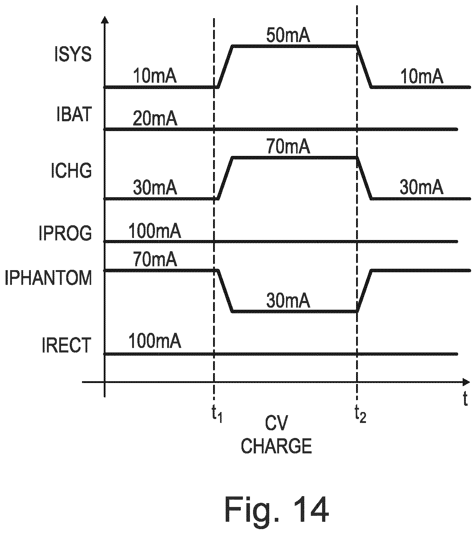

FIG. 14 shows an exemplary timing diagram with a CV-CHARGE phase during the charging process of the energy storage unit 15. As an initial condition, IBAT = 20mA. Then, the current ISYS increases from 10mA to 50mA at time t1. As a consequence, the charge current ICHG increases at time t1 from 30mA to 70mA. It can be seen, that at time t1, where the charge current ICHG raises to 70mA, the balance load current IPHANTOM decreases to 30mA. As a result, the rectifier output current IRECT remains constant at approximately 100mA independent from the variations in the system current ISYS, the charge current ICHG but thanks to the balance load current IPHANTOM.

It should be noted that all of the above-mentioned numerical values of any voltages and currents are, of course, only exemplary.

The proposed power path control unit 120 allows system platform operation in dead energy storage unit mode by separating system and energy storage unit power paths during trickle charge of the energy storage unit 15. Furthermore, the proposed power path control unit 120 manages system platform current load variations during trickle charge and constant voltage charge by keeping constant the rectifier input impedance (and consequently impedance seen by the antenna) through an auto-regulated system. As described above, in CC-mode, the power path control unit 120 may manage ICHG variations more generally. The balance load unit 130 can also be used during constant current charge operation.

In this way, the wireless charging receiver's power dissipation may be optimized by avoiding the use of a clamp voltage circuit on the rectifier output. Hence, the integrity of the emitter/receiver communication may be maintained.

The illustrated power path control unit 120 may be used in wireless charging applications like e.g. wearables, earbuds, hearing aids, stylus, watches, etc. Moreover, the power path control unit 120 is applicable for NFC wireless charging or other wireless charging protocols.

The proposed wireless charging receiver 100 allows system operation e.g. in dead battery using a dedicated system power path to supply system platform and using a dedicated battery charging path to charge the battery during trickle charge.

Furthermore, the proposed wireless charging receiver 100 may handle system current variations load by auto regulating rectifier input impedance.

The proposed wireless charging receiver 100 uses an auto-regulated system (balance load unit) including two current feedbacks loops to sense the main power path current and the trickle charger current. By means of said balance load unit, system transient load may be managed to keep constant the impedance seen by the antenna or to keep constant the rectifier output current by adjusting dynamically the phantom load current.

Moreover, the proposed wireless charging receiver 100 defines a programmable default current value in balance load unit acting as a tank of current to manage system transient load current. The lower the programmed value is, the lower the power dissipation is. The proposed wireless charging receiver 100 enables a balance load circuit during trickle charge to answer to system transient load. Moreover, the proposed wireless charging receiver 100 enables the balance load circuit during constant voltage charge to answer to system transient load or battery charge current variation.

The wireless charging receiver 100 of the present disclosure is able to handle transient load during constant current charging phase by using supplement mode, in which electric energy is supplemented by the energy storage unit to energize an external device. The proposed wireless charging receiver 100 builds the balance load circuit using current senses and current based circuit to ensure a fast transient response. The balance load unit can also be used during CC-MODE to compensate negative transient load.

The illustrated wireless charging receiver 100 does not require stability analysis for the auto-regulated system as it is intrinsically stable and may improve an efficiency of the wireless charging receiver 100 by avoiding a usage of a voltage clamp element.

Summarizing, the power path controller of a wireless charging receiver of the present disclosure:

- provides a dedicated system power path and a dedicated battery charging power path during trickle charge to allow system operation in dead battery.
- combines a main charger, a trickle charger, a battery path power switch, and an auto regulated system called "phantom load circuit".
- manages system transient load by keeping constant the impedance seen by the antenna using an auto regulated system during trickle charge and constant voltage charge.
- includes this auto regulated system using a specific current feedback loop arrangement consisting into sensing system and battery charging currents to keep constant rectifier output impedance.
- uses this auto regulated system to reduce power dissipation compared to state of art (which are using voltage clamps or shunt regulator or DC limiter).
- reduces wireless charging receiver power dissipation by keeping a minimum set of dissipative elements during charging operations.

As another example, where the specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

Based upon the above discussion and illustrations, those skilled in the art will readily recognize, that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

It should be noted that the term "comprising" does not exclude other elements or steps and "a" or "an" does not exclude a plurality. Also elements described in association with different embodiments may be combined. It should also be noted, that reference signs in the claims should not be construed as limiting the scope of the claims.

Reference signs:

| 1 | rectifier |
|---|---|
| 2 | voltage clamp |
| 3 | power path controller |
| 4 | communication controller |
| 5 | antenna |
| 10 | wireless charging receiver |
| 15 | energy storage unit |
| 20 | wireless charging transmitter |
| 30 | external device |
| 100 | wireless charging receiver |
| 110 | rectifier unit |
| 111 | rectifier element |
| 112 | communication module |
| 120 | power path control unit |
| 121-124 | access nodes |
| 125 | antenna |
| 130 | balancing load unit |
| 140 | main charge unit |
| 141 | bulk management device |
| 142 | linear charger controller |
| 143 | sensing unit |
| 150 | power switch |
| 160 | trickle charge unit |
| 170 | operation control unit |
| 200 | wireless charging transmitter |

**Claims**

1. A wireless charging receiver (100), comprising:

   a rectifier unit (110) comprising a first access node (121) and a second access node (122), the first and second access nodes (121, 122) configured to provide a coupling to an external antenna (125); and
   a power path control unit (120), comprising
   a third access node (123) configured to provide electric power to a connected device (30); and
   a fourth access node (124) configured to provide electric power to a connected energy storage unit (15), wherein the power path control unit (120) is configured to provide essentially constant impedance to a rectifier unit input during the provision of electric power to at least one of the following: the connected device (30), the connected energy storage unit (15).

2. The wireless charging receiver (100) according to claim 1, wherein the rectifier unit (110) comprises a rectifier element (111) being coupled to the access nodes (121, 122) and wherein the power path control unit (120) comprises:

   a balance load unit (130) being coupled to the rectifier element (111), wherein
   a first sensing current (ICHG_SENSE) representing a sum of electric current to the external device (30) and to the external energy storage unit (15); and

a second sensing current (ITRICKLE_SENSE) representing an electric current during trickle charge of the external energy storage unit (15) are coupled to the balance load unit (130).

3. The wireless charging receiver (100) according to claim 1 or 2, wherein the power path control unit (120) further comprises a main charge unit (140), the main charge unit (140) being configured to act as a regulator during the trickle charge of the external energy storage unit (15), wherein a trickle charge unit (160) is being configured to act as a charger during trickle charge of the external energy storage unit (15).

4. The wireless charging receiver (100) according to claim 3, wherein the main charge unit (140) is configured to act as a charger during constant current mode charging (CC-MODE) of the external energy storage unit (15) and during constant voltage mode charging (CV-MODE) of the external energy storage unit (15).

5. The wireless charging receiver (100) according to claim 3 or 4, wherein the trickle charge unit (160) is configured to act as a current source during the provision of electric energy to the external energy storage unit (15) in a decharged state up to a specified voltage level (VBAT_LOW).

6. The wireless charging receiver (100) according to any of claims 3 to 5, wherein the first sensing current (ICHG_SENSE) is provided from the main charge unit (140) to the balance load unit (130) and wherein the second sensing current (ITRICKLE_SENSE) is provided from the trickle charge unit (160) while providing electric energy to the external energy storage unit (15) during trickle charge.

7. The wireless charging receiver (100) according to any of claims 3 to 6, wherein in a case, that the external energy storage unit (15) is charged to a target voltage (VBAT_TARGET), the main charge unit (140) is configured to be switched automatically from a constant current charging mode (CC-MODE) to a constant voltage charging mode charging (CV-MODE) to keep the charging voltage of the external energy storage unit (15) essentially constant.

8. The wireless charging receiver (100) according to any of claims 2 to 7, wherein the balance load unit (130) is configured to be disabled or to be enabled during the constant current mode charging (CC-MODE).

9. The wireless charging receiver (100) according to any of claims 4 to 8, further comprising a switch unit (150), the switch unit (150) being configured to be closed in constant current mode charging (CC-MODE) and constant voltage mode charging (CV-MODE) of the external energy storage unit (15).

10. The wireless charging receiver (100) according to any of the claims 2 to 9, wherein the balance load unit (130) is enabled during trickle charge and constant voltage mode charging (CV-MODE) of the external energy storage unit (15).

11. The wireless charging receiver (100) according to claim 10, wherein the balance load unit (130) is enabled during constant current mode charging (CC-MODE) of the external energy storage unit (15).

12. The wireless charging receiver (100) according to any of the claims 2 to 11, wherein the balance load unit (130) is programable, wherein the balance load unit (130) is configured to consume a programmed value, wherein the programmed current value depends at least on: current to the system platform (30), current to the energy storage unit (15).

13. The wireless charging receiver (100) according to claim 12, wherein the balance load unit (130) is configured to generate current mirror-based representation of a change of the current charge in order to generate a current through the balance load unit (130).

14. A method of operating a wireless charging receiver (100), comprising:

receiving electromagnetic energy via an antenna (125) of a rectifier unit (110);
providing said received electromagnetic energy at least partially to at least one of: a connected device (30), a connected energy storage unit (15); wherein
an impedance vis-a-vis a rectifier unit output is kept constant, independent from load variations on at least one of: the connected device (30), the connected energy storage unit (15).

15. The method according to claim 14, comprising:

supplying a first sensing electric current (ICHG_SENSE) representing a sum of electric current to the external device (30) and to the external energy storage unit (15) to a balance load unit (130) being coupled to the rectifier element (111);

supplying a second sensing electric current (ITRICKLE_SENSE) representing an electric current during trickle charge of the external energy storage unit (15) to the balance load unit (130); and

providing an electric current (IPHANTOM) through the balance load unit (130) depending on the first sensing electric current and the second sensing electric current such that the impedance vis-a-vis a rectifier unit (110) is kept constant.

**Amended claims in accordance with Rule 137(2) EPC.**

1.  A wireless charging receiver (100), comprising:

    a rectifier unit (110) comprising a first access node (121) and a second access node (122), the first and second access nodes (121, 122) configured to provide a coupling to an external antenna (125); and
    a power path control unit (120), comprising
    a third access node (123) configured to provide electric power to a connected device (30); and
    a fourth access node (124) configured to provide electric power to a connected energy storage unit (15), wherein the power path control unit (120) is configured to provide essentially constant impedance to a rectifier unit input during the provision of electric power to at least one of the following: the connected device (30), the connected energy storage unit (15), wherein the rectifier unit (110) comprises a rectifier element (111) being coupled to the access nodes (121, 122) and wherein the power path control unit (120) comprises:

    a balance load unit (130) being coupled to the rectifier element (111), wherein
    a first sensing current (ICHG_SENSE) representing a sum of electric current to the external device (30) and to the external energy storage unit (15); and
    a second sensing current (ITRICKLE_SENSE) representing an electric current during trickle charge of the external energy storage unit (15) are coupled to the balance load unit (130), wherein the wireless charging receiver (100) is configured to provide an electric current (IPHANTOM) through the balance load unit (130) depending on the first sensing current (ICHG_SENSE) and the second sensing current (ITRICKLE_SENSE) such that the impedance vis-a-vis a rectifier unit (110) is kept constant.

2.  The wireless charging receiver (100) according to claim 1, wherein the power path control unit (120) further comprises a main charge unit (140), the main charge unit (140) being configured to act as a regulator during the trickle charge of the external energy storage unit (15), wherein a trickle charge unit (160) is being configured to act as a charger during trickle charge of the external energy storage unit (15).

3.  The wireless charging receiver (100) according to claim 2, wherein the main charge unit (140) is configured to act as a charger during constant current mode charging (CC-MODE) of the external energy storage unit (15) and during constant voltage mode charging (CV-MODE) of the external energy storage unit (15).

4.  The wireless charging receiver (100) according to claim 2 or 3, wherein the trickle charge unit (160) is configured to act as a current source during the provision of electric energy to the external energy storage unit (15) in a discharged state up to a specified voltage level (VBAT_LOW).

5.  The wireless charging receiver (100) according to any of claims 2 to 4, wherein the first sensing current (ICHG_SENSE) is provided from the main charge unit (140) to the balance load unit (130) and wherein the second sensing current (ITRICKLE_SENSE) is provided from the trickle charge unit (160) while providing electric energy to the external energy storage unit (15) during trickle charge.

6.  The wireless charging receiver (100) according to any of claims 2 to 5, wherein in a case, that the external energy storage unit (15) is charged to a target voltage (VBAT_TARGET), the main charge unit (140) is configured to be switched automatically from a constant current charging mode (CC-MODE) to a constant voltage charging mode charging (CV-MODE) to keep the charging voltage of the external energy storage unit (15) essentially constant.

7.  The wireless charging receiver (100) according to any of the preceding claims, wherein the balance load unit (130) is configured to be disabled or to be enabled during the constant current mode charging (CC-MODE).

8.  The wireless charging receiver (100) according to any of claims 3 to 7, further comprising a switch unit (150), the switch unit (150) being configured to be closed in constant current mode charging (CC-MODE) and constant voltage mode charging (CV-MODE) of the external energy storage unit (15).

9.  The wireless charging receiver (100) according to any of the preceding claims ,
    wherein the balance load unit (130) is enabled during trickle charge and constant voltage mode charging (CV-MODE) of the external energy storage unit (15).

10. The wireless charging receiver (100) according to claim 9, wherein the balance load unit (130) is enabled during constant current mode charging (CC-MODE) of the external energy storage unit (15).

11. The wireless charging receiver (100) according to any of the preceding claims,
    wherein the balance load unit (130) is programable, wherein the balance load unit (130) is configured to consume a programmed value, wherein the programmed current value depends at least on: current to the system platform (30), current to the energy storage unit (15).

12. The wireless charging receiver (100) according to claim 11, wherein the balance load unit (130) is configured to generate current mirror-based representation of a change of the current charge in order to generate a current through the balance load unit (130).

13. A method of operating a wireless charging receiver (100), comprising:

    receiving electromagnetic energy via an antenna (125) of a rectifier unit (110);
    providing said received electromagnetic energy at least partially to at least one of: a connected device (30), a connected energy storage unit (15); wherein
    an impedance vis-a-vis a rectifier unit output is kept constant, independent from load variations on at least one of: the connected device (30), the connected energy storage unit (15), comprising:

    supplying a first sensing electric current (ICHG_SENSE) representing a sum of electric current to the external device (30) and to the external energy storage unit (15) to a balance load unit (130) being coupled to the rectifier element (111);
    supplying a second sensing electric current (ITRICKLE_SENSE) representing an electric current during trickle charge of the external energy storage unit (15) to the balance load unit (130); and
    providing an electric current (IPHANTOM) through the balance load unit (130) depending on the first sensing electric current and the second sensing electric current such that the impedance vis-a-vis a rectifier unit (110) is kept constant.

Fig. 1

Fig. 2

EP 4 734 331 A1

Fig. 3

EP 4 734 331 A1

IPHANTOM
(Output current load at rectifier output)

130

IBIAS

BIAS CURRENT

IPROG_SEL<N:0>

(PROGRAMMABILITY)

IPHANTOM = IPROG-ISYS
= IPROG-(ICHG_SENSE-ITRICKLE_SENSE)

ICHG_SENSE

ITRICKLE_SENSE

FEEDBACK
INPUTS

Fig. 4

Fig. 5

EP 4 734 331 A1

Fig. 6

Fig. 7

EP 4 734 331 A1

Fig. 8

Fig. 9

Fig. 10

**Fig. 11**

VBAT
VBAT_TARGET
VBAT_RECHARGE
VSYS
VBAT_LOW

| TRICKLE CHARGE | CC MODE | CV MODE | CHARGED MODE | CC MODE (RECHARGE) |
|---|---|---|---|---|
| MAIN CHARGER regulates VSYS | MAIN CHARGER in CC | MAIN CHARGER in CV | MAIN CHARGER OFF | MAIN CHARGER in CC |
| BATTERY PATH OFF | BATTERY PATH ON | BATTERY PATH ON | BATTERY PATH ON | BATTERY PATH ON |
| TRICKLE CHARGER ON | TRICKLE CHARGER OFF | TRICKLE CHARGER OFF | TRICKLE CHARGER OFF | TRICKLE CHARGER OFF |
| PHANTOM LOAD ON | PHANTOM LOAD ON | PHANTOM LOAD ON | PHANTOM LOAD OFF | PHANTOM LOAD ON |

t

ICHG
ICHG_CC
ICHG_TRICKLE
ITERM

t

0

ISYS — 50mA — 20mA ... 20mA
IBAT=ITRICKLE — 10mA
ICHG — 60mA — 30mA ... 30mA
IPROG — 60mA
IPHANTOM — 40mA ... 10mA
IRECT — 70mA

$t_1$ $t_2$ t

TRICKLE
CHARGE

## Fig. 12

ISYS — 50mA
IBAT — 50mA ... 10mA ... 50mA
ICHG — 100mA ... 60mA ... 100mA
IPROG — 100mA
IPHANTOM — 40mA — 0mA ... 0mA
IRECT — 100mA

$t_1$ $t_2$ t

CC
CHARGE

## Fig. 13

Fig. 14

Europäisches
Patentamt

European
Patent Office

Office européen
des brevets

# EUROPEAN SEARCH REPORT

**Application Number**

EP 24 30 6804

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/278562 A1 (JUDSON BURTON C [US] ET AL) 1 September 2022 (2022-09-01) * paragraphs [0030] - [0043], [0081] - [0088]; figure 2 * ----- | 1-15 | INV. H02J50/80 |
| X | US 11 728 678 B2 (CONNECTED INTELLIGENCE SYSTEMS LTD [IL]) 15 August 2023 (2023-08-15) * column 10, line 19 - column 20, line 19; figures 1-4 * ----- | 1,14 | |

**TECHNICAL FIELDS SEARCHED (IPC)**

H02J

The present search report has been drawn up for all claims

| Place of search | Date of completion of the search | Examiner |
|---|---|---|
| Munich | 21 March 2025 | Bergler, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 6804

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | Publication date | Patent family member(s) | Publication date |
|---|---|---|---|
| US 2022278562 A1 | 01-09-2022 | AU 2020324452 A1 | 10-03-2022 |
| | | CA 3150169 A1 | 11-02-2021 |
| | | CN 114556742 A | 27-05-2022 |
| | | EP 4010958 A1 | 15-06-2022 |
| | | JP 7645235 B2 | 13-03-2025 |
| | | JP 2022544170 A | 17-10-2022 |
| | | KR 20220044781 A | 11-04-2022 |
| | | US 2022278562 A1 | 01-09-2022 |
| | | WO 2021026466 A1 | 11-02-2021 |
| US 11728678 B2 | 15-08-2023 | CN 113287180 A | 20-08-2021 |
| | | EP 3906572 A1 | 10-11-2021 |
| | | ES 2968758 T3 | 13-05-2024 |
| | | IL 264042 A | 30-06-2020 |
| | | US 2022077715 A1 | 10-03-2022 |
| | | WO 2020141501 A1 | 09-07-2020 |

EPO FORM P0459

For more details about this annex : see Official Journal of the European Patent Office, No. 12/82